# EUROPEAN PATENT SPECIFICATION

(11) **EP 1 967 747 B1**
(45) Date of publication and mention of the grant of the patent: **12.09.2012**
(21) Application number: 07103744.4
(22) Date of filing: 08.03.2007
(51) Int. Cl.: F16C 3/12, F16C 11/02

(54) **Pin for a crank shaft journal, preferably for internal combustion engines**
Kurbelwellenzapfen, insbesondere für Verbrennungsmotoren
Tenon de vilebrequin, notamment pour moteurs à explosion

(43) Date of publication of application: 10.09.2008
(73) Proprietor: Garavello, Renato, 36050 Sovizzo (IT)
(72) Inventor: Garavello, Renato, 36050 Sovizzo (IT)
(74) Representative: Fisauli, Beatrice A. M.

(56) References cited:
- GB-A- 920 385
- US-A- 3 608 396

## Description

The object of this invention is a connecting rod system with a particularly shaped piston pin coupling connecting rod and crank and driving shaft, for devices such as internal-combustion engines, engines for presses, steam-operated devices and others.

In particular, the present system permits to obtain an eccentric coupling system for the coupling of connecting rod and crank. In other terms, the present system causes the connecting rod support to work on the crank in an eccentric way, the crank usually being integral with the driving shaft.

As is known, it is possible to couple the connecting rod and the crank in an eccentric way so that there is already a torque at the top dead center, with consequent advantages as concerns the performance and the consumption in case of internal-combustion engines.

In fact, in the conventional shape of the connecting rod in respect to the driving shaft, during the "explosion", ideally at the top dead center, there is a cutting force, operated by the piston, with lying straight line passing through the driving shaft, which does not generate any torque but stresses the driving shaft itself and the relative supports.

On the contrary, if there is an eccentric connection of the connecting rod with the driving shaft for the fact that at the top dead centre, the connecting rod-crank kinematic coupling is provided with a shifting arm, the connecting rod remains in axis with the driving shaft supports and the actual anchoring point of the connecting rod on the driving shaft is shifted for a predetermined angle and therefore, in the expansion phase, the force of the explosion causes a considerable torque even at the top dead centre.

Said particular type of connection needs particular coupling elements to create the connecting rod-crank coupling. The working must be very precise especially in case it is necessary to modify a pre-existing engine. However, said operation is expensive and long.

In case the working is more rapid and not precise, said intervention can cause serious problems as regards the strength and solidity of the engine itself.

Besides, if the connection between connecting rod and crank is rather small as regards the connecting sector, it is possible to make the negative effect of the so-called "iron wire" worse or a connection is obtained which is not flexible, which makes the performance of the engine worse considerably.

US-A-3,608,396, cf. preamble of claim 1, discloses a crankshaft which comprises two main shafts in axial alignment and with ends in spaced relation, and three discs connecting the free end of the two shafts with the driveshaft. Each end of the two shafts is inserted between and fixed to two discs through a pin comprising blocking means.

The aim and function of the present invention defined by claim 1 is to solve all the above problems and other ones by carrying out a connecting rod-crank coupling element of simple production and very strong, all the various components for the connection between the piston and the driving shaft being maintained in balance.

The shaped piston pin permits to obtain an eccentric coupling between the connecting rod and the crank connected with the driving shaft. In particular, said connection can be obtained in a safe and precise way thanks to the rapid carrying out the two cats inside the piston pin.

In addition, it is possible to insert a special stabilizing element inside the piston pin. The stabilizing element makes the structure of the piston pin stronger and prevents the unwished "iron wire" effect of the moving components.

Details of the invention will be better understood from the following specification which is supplied as a non-exclusive example on the base of the accompanying drawings wherein:

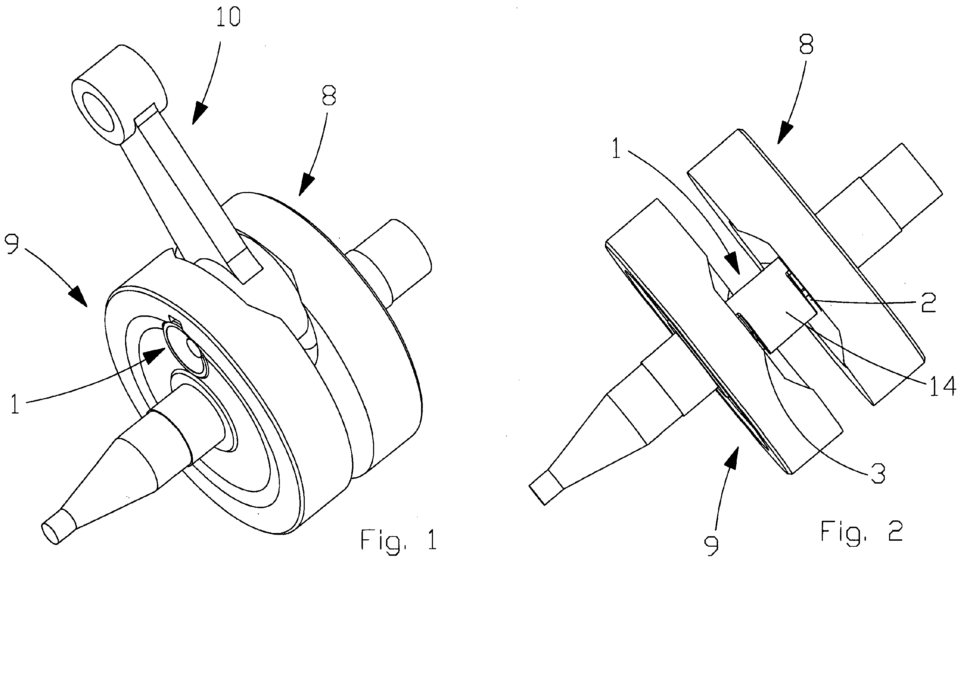

Fig. 1 shows the coupling of the connecting rod with the crank-driving shaft;
Fig. 2 shows the connection of the two parts of the cranks-driving shaft by means of the connecting piston pin;
Fig. 3 shows the various components of Fig. 1 in an exploded representation;

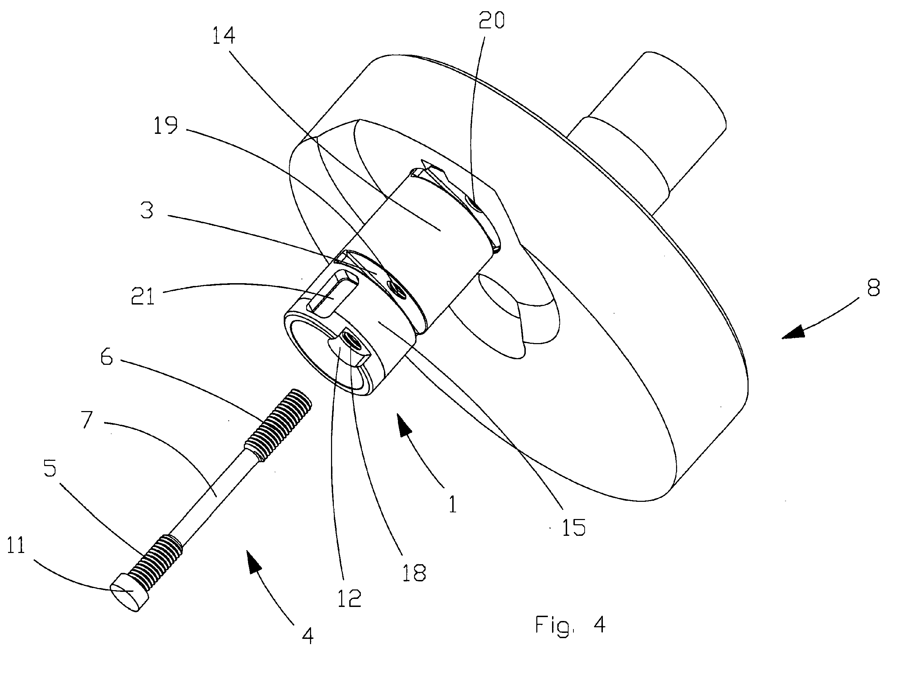

Fig. 4 is a view of the piston pin according to the present invention inserted in a crank-driving shaft;
Fig. 5 shows the piston pin of Fig. 4 sectioned according to a plane which passes through the opening of insertion of the stabilizing element; and
Fig. 6 shows the piston pin of Fig. 5 further sectioned according to a plane which is orthogonal to the axis of development of the piston pin and passes through a cut of the piston pin.

With reference to the accompanying drawings, number 1 denotes a piston pin according to the present invention. The piston pin 1 is inserted in suitable seats 22 of the driving shaft-cranks 8, 9 to connect the cranks with a connecting rod 10 which in turn is connected with a piston of the combustion chamber.

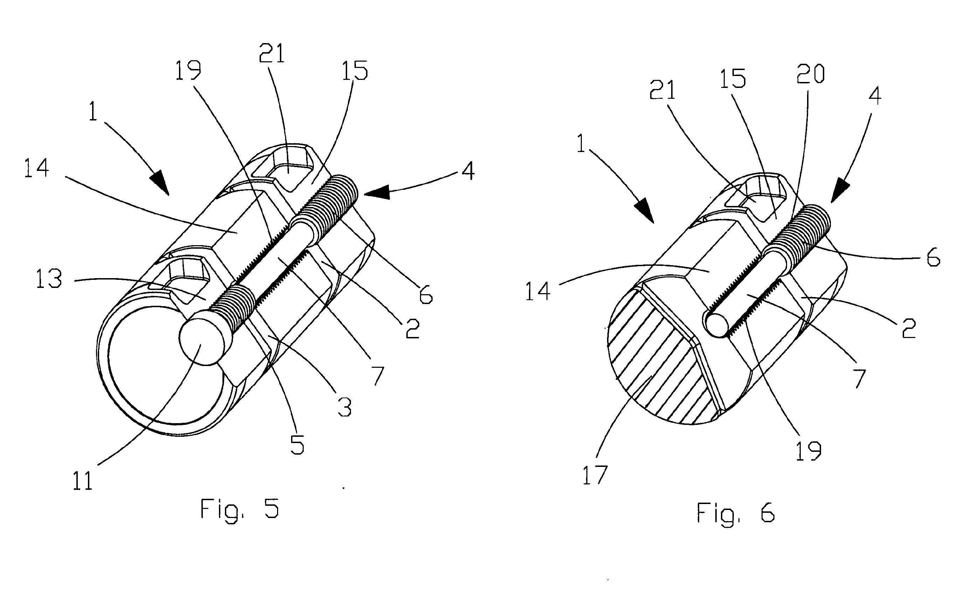

In order to obtain an eccentric coupling, the piston pin 1 is provided with two cuts 2, 3. The arrangement of said cuts 2, 3 is orthogonal to the axis of the piston pin 1 as represented in Fig. 5. In this way, the piston pin 1 is subdivided into three sectors: two lateral sectors 13, 15 and a central sector 14, all the three sectors forming an only element through a connecting part 17.

The driving shaft-cranks 8, 9 are coupled with the two lateral sectors 13, 15 of the piston pin 1, respectively and the connecting rod 10 is coupled with the central sector 14 of the piston pin 1 and therefore, the cranks receive a thrust from the connecting rod 10. Said thrust corresponds to a torque. The force of the torque is applied to the barycentre of the connecting part 17 that connects the two lateral sectors 13, 15 with the central sector 14 as it can be seen in Fig. 6.

The eccentricity of said coupling is obtained through the displacement of said barycentre from the central axis of the piston pin 1. The distance of said displacement corresponds to the arm of the torque determined by the connecting rod 10. The longer the distance of the barycentre is from the axis of the piston pin 1, the higher the arm is and consequently, the higher the torque is.

In order to increase the displacement, it is sufficient to make the cuts 2, 3 deeper and to differently dimension the joint section. In addition, the eccentric effect depends on the orientation of said section at the top dead centre.

An example of joint section of sectors 13, 14, 15 can be seen in Fig. 6. However, the joint section can have different dimensions and shapes according to the result to be obtained as concerns eccentricity and solidity of the structure.

The piston pin 1 according to the present invention is provided with a stud bolt 4 which is positioned inside the piston pin 1. More precisely, the stud bolt 4 is placed in the semicylinder which is subdivided into three parts 13, 14, 15.

In particular, said stud bolt 4 is cylindrical and is provided with two lateral sectors 5, 6 which have a longer diameter than a central sector 7 of the stud bolt 4. Said lateral sectors 5, 6 are threaded sectors and are coupled with openings 18, 20 which have the same passing screw thread and are positioned in the lateral sectors 13, 15 of the piston pin 1.

In this way, said two lateral sectors 13, 15 of the piston pin 1 form an only integral fixed element and prevent the formation of the so-called "iron wire" effect on the driving shaft.

Accordingly, the central sector 14 of the piston pin 1 remains connected only to the remaining sector 17 of the piston pin 1; in fact, the stud bolt 4 passes through the central sector 14 of the piston pin 1 without touching part 14 itself because the diameter of the central sector 7 of the stud bolt 4 is shorter than the opening 19 of said central sector 14.

Besides, the stud bolt 4 is provided with a head 11 which beats on a cavity 12 of the lateral sector 13 of the piston pin 1.

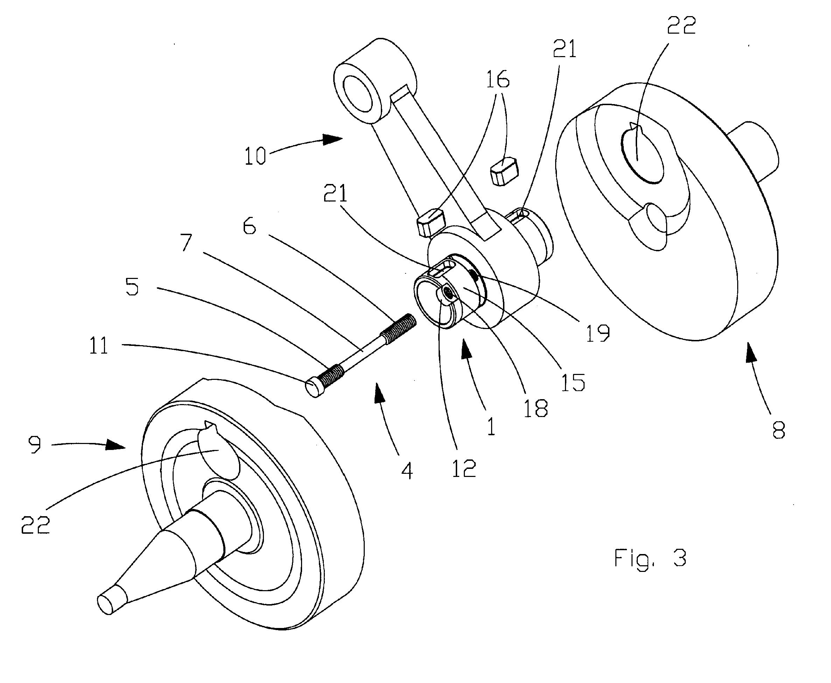

In Fig. 3, keys 16 are represented. These keys 16 have to be inserted in suitable seats 21 to prevent the piston pin 1 from rotating in relation with the hole 22 in which the piston pin 1 is inserted. Obviously, the anti-rotation blocking system is of the above-described type or, alternatively, may be of another type according to the need.

The so-shaped piston pin 1 permits to carry out an eccentric connecting rod system with elements that are already present on the driving shaft, just a simple working being required.

A technician of the sector can conceive some changes or versions that are to be considered as included in the scope of protection of the invention.

## Claims

1. Connecting rod system comprising a piston pin (1) that couples connecting rod (10), crank and driving shaft (8,9) and forms an eccentric rod system, the piston pin (1) showing two cuts (2, 3) which are disposed orthogonally to the axis of the piston pin and form three sectors (13, 14, 15) of which the two external sectors (13, 15) correspond to the connection with the crank-driving shaft (8, 9) and the internal sector (14) is connected with the connecting rod (10)
**characterized by**
comprising a connecting element (4) between said end sectors (13, 15) so that the end sectors (13, 15) are integral to each other.

2. Connecting rod system as claimed in claim 1, **characterized in that** the crank-driving shaft (8, 9) receives a thrust from the connecting rod (10) which is connected with the central sector (14) of the piston pin (1), which thrust corresponds to a torque which is applied to the barycentre of the joint section between said lateral sectors (13, 15)
and said central sector (14).

3. Connecting rod system as claimed in the previous claims, **characterized in that** said cuts (2, 3) form a longitudinal part (17) through which said three sectors (13, 14, 15) form an only element.

4. Connecting rod system as claimed in the previous claims, **characterized in that** said connecting element (4) is a stud bolt which is positioned inside said three parts (13, 14, 15).

5. Connecting rod system as claimed in the previous claims, **characterized in that** said stud bolt (4) is cylindrical and is provided with two lateral threaded ends (5, 6) which have a greater diameter than the central part (7); said lateral parts (5, 6) are coupled with threaded openings (18, 20) which are positioned in the lateral parts (13, 15) of the piston pin (1); the diameter of said central part (7) of said stud bolt (4) being smaller than the diameter of a through-hole included in the central part (14) of said piston pin (1).

6. Connecting rod system as claimed in the preceding claims, **characterized in that** said stud (4) comprises a head (11) which beats on a cavity (12) of the lateral part (13) of said piston pin (1).

7. Connecting rod system as claimed in the preceding claims, **characterized in that** it comprises keys (16) positioned in seats (21) to prevent the piston pin (1) from rotating in respect to the holes (22) in which piston pin (1) is inserted.

## Patentansprüche

1. Pleuelstangensystem mit einem Kolbenbolzen (1), der eine Pleuelstange (10) mit einer Kurbelantriebswelle (8, 9) verbindet und ein exzentrisches Bolzensystem bildet, wobei der Kolbenbolzen (1) zwei senkrecht zur Achse des Kolbenbolzens (1) eingebrachte Einschnitte (2, 3) aufweist, die drei Sektoren (13, 14, 15) bestimmen, von denen die beiden äußeren Sektoren (13, 15) zur Verbindung mit der Kurbelantriebswelle (8, 9) korrespondieren und der innere Sektor (14) mit der Pleuelstange (10) verbunden ist, **dadurch gekennzeichnet, dass** zwischen den Endsektoren (13, 15) ein Verbindungselement (4) umfasst ist, so dass die Endsektoren (13, 15) zueinander integral sind.

2. Pleuelstangensystem nach Anspruch 1, **dadurch gekennzeichnet, dass** die Kurbelantriebswelle (8, 9) Schubkräfte von der Pleuelstange (10) aufnimmt, die mit dem zentralen Sektor (14) des Kolbenbolzens (1) verbunden ist, wobei der Schub mit einem Drehmoment korrespondiert, das auf den Schwerpunkt des Verbindungssektors zwischen den Seitensektoren (13, 15) und dem zentralen Sektor (14) aufgebracht wird.

3. Pleuelstangensystem nach einem der vorhergehenden Ansprüche, **dadurch gekennzeichnet, dass** die Einschnitte (2, 3) ein Längsteil (17) bilden, durch das die drei Sektoren (13, 14, 15) ein einziges Element bilden.

4. Pleuelstangensystem nach einem der vorhergehenden Ansprüche, **dadurch gekennzeichnet, dass** das Verbindungselement (4) ein Gewindebolzen ist, der innerhalb der drei Teile (13, 14, 15) positioniert ist.

5. Pleuelstangensystem nach einem der vorhergehenden Ansprüche, **dadurch gekennzeichnet, dass** der Gewindebolzen (4) zylindrisch ist und mit zwei seitlichen Gewindeenden (5, 6) versehen ist, die einen größeren Durchmesser als das zentrale Teil (7) aufweisen, wobei die Seitenteile (5, 6) mit Gewindebohrungen (18, 20) gekoppelt sind, die in den Seitenteilen (13, 15) des Kolbenbolzens (1) angeordnet sind und wobei der Durchmesser des zentralen Teils (7) des Gewindebolzens (4) kleiner als der Durchmesser einer im zentralen Teil (14) des Kolbenbolzens (1) enthaltenen Durchgangsbohrung.

6. Pleuelstangensystem nach einem der vorhergehenden Ansprüche, **dadurch gekennzeichnet, dass** der Gewindebolzen (4) einen Kopf (11) umfasst, der an einer Ausnehmung (12) des Seitenteils (13) des Kolbenbolzens (1) anliegt.

7. Pleuelstangensystem nach einem der vorhergehenden Ansprüche, **dadurch gekennzeichnet, dass** Passfedern (16) umfasst sind, die in Aufnahmen (21) aufgenommen sind, um eine Drehbewegung des Kolbenbolzens (1) gegenüber den Bohrungen (22), in denen der Kolbenbolzen (1) aufgenommen ist, zu verhindern.

## Revendications

1. Système à bielle comprenant un tourillon (1) de piston qui accouple bielle (10), vilebrequin et arbre moteur (8, 9) et forme un système à bielle d'excentrique, le tourillon (1) de piston présentant deux entailles (2, 3) qui sont disposées de manière orthogonale par rapport à l'axe du tourillon de piston et forment trois secteurs (13, 14, 15), les deux secteurs externes (13, 15) correspondant au raccordement avec les vilebrequin-arbre moteur (8, 9) et le secteur interne (14) étant raccordé à la bielle (10), **caractérisé en ce qu'**il comprend un élément (4) de raccordement entre lesdits secteurs terminaux (13, 15) de sorte que les secteurs terminaux (13, 15) soient intégrés l'un à l'autre.

2. Système à bielle selon la revendication 1, **caractérisé en ce que** les vilebrequin-arbre moteur (8, 9) reçoivent une poussée de la bielle (10) qui est raccordée au secteur central (14) du tourillon (1) de piston, laquelle poussée correspond à un couple qui est appliqué au barycentre du tronçon commun entre lesdits secteurs latéraux (13, 15) et ledit secteur central (14).

3. Système à bielle selon les revendications précédentes, **caractérisé en ce que** lesdites entailles (2, 3) forment une partie longitudinale (17) par laquelle lesdits trois secteurs (13, 14, 15) forment un élément unique.

4. Système à bielle selon les revendications précédentes, **caractérisé en ce que** ledit élément (4) de raccordement est un goujon fileté qui est positionné à l'intérieur desdites trois parties (13, 14, 15).

5. Système à bielle selon les revendications précédentes, **caractérisé en ce que** ledit goujon fileté (4) est cylindrique et est prévu avec deux extrémités latérales (5, 6) filetées qui ont un diamètre plus grand que la partie centrale (7) ; lesdites parties latérales (5, 6) sont accouplées aux ouvertures filetées (18, 20) qui sont positionnées dans les parties latérales (13, 15) du tourillon (1) de piston ; le diamètre de ladite partie centrale (7) dudit goujon fileté (4) étant plus petit que le diamètre d'un trou débouchant inclus dans la partie centrale (14) dudit tourillon (1) de piston.

6. Système à bielle selon les revendications précédentes, **caractérisé en ce que** ledit goujon fileté (4) comprend une tête (11) qui donne sur une cavité (12) de la partie latérale (13) dudit tourillon (1) de piston.

7. Système à bielle selon les revendications précédentes, **caractérisé en ce qu'**il comprend des clavettes (16) positionnées dans des sièges (21) pour empêcher que le tourillon (1) de piston ne tourne par rapport aux trous (22) dans lesquels le tourillon (1) de piston vient s'insérer.
